# EUROPEAN PATENT APPLICATION

(11) **EP 4 428 435 A1**
(43) Date of publication of application: **11.09.2024**
(21) Application number: 24161114.4
(22) Date of filing: 04.03.2024
(51) Int. Cl.: F21V 5/00, G02B 19/00, F21V 5/02, G02B 5/02, F21V 7/00

(54) **SYSTEMS AND METHODS FOR AN ULTRA-WIDE FIELD OF ILLUMINATION DIFFUSER**

(30) Priority: 09.03.2023 US 202318119358
(71) Applicant: II-VI Delaware, Inc., Wilmington, DE 19890 (US)
(72) Inventor: CAI, Pei-Song, Wilmington 19801 (US); O'DANIEL, Jason, Wilmington 19801 (US); LIU, Hong-Zhi, Wilmington 19801 (US); SCHIATTONE, Francesco, Wilmington 19801 (US); CHEN, Yi-Yung, Wilmington 19801 (US)
(74) Representative: Schmidt, Christian

(57) **Abstract**

An opto-electronic device to distribute an ultra-wide field of illumination is disclosed. In examples, the electronic device includes an optical source to generate light and a diffuser to receive and distribute the light. The diffuser includes a plurality of extensions, each having a reflective surface arranged at an angle to cause total internal reflection of an incident light ray, and an exit surface arranged at an angle relative to the reflective surface and configured to direct the light ray at one or more transmission angles different from an incident angle.

## Description

### BACKGROUND

Many opto-electronic devices employ optics to illuminate an object of interest. When using a conventional optical diffuser to illuminate a target field of illumination (FOI), Fresnel losses become extremely high as the angle of incidence (AOI) approaches the critical angle, the angle where total internal reflection occurs, out of the diffuser substrate material. This limits the achievable FOI of conventional diffusers, thereby limiting the effectiveness and usefulness of these diffusers.

The subject matter of the present disclosure is directed to avoiding the negative aspects of the problems set forth above.

### SUMMARY OF THE DISCLOSURE

According to the present disclosure, a diffuser to distribute an ultra-wide field of illumination is provided. In particular, the diffuser includes a plurality of extensions, each with a reflective surface arranged at an angle to cause total internal reflection of an incident light ray, and an exit surface arranged at an angle relative to the reflective surface and configured to direct the light ray at one or more transmission angles different from an incident angle.

These and other features of the present disclosure will become more fully apparent from the following description and appended claims, as set forth hereinafter.

### BRIEF DESCRIPTION OF THE DRAWINGS

To further clarify the above and other features of the present disclosure, a more particular description of the subject matter will be rendered by reference to specific examples thereof, which are illustrated in the appended drawings. It is appreciated that these drawings depict only some examples of the subject matter and are therefore not to be considered limiting of its scope.
FIG. 1 illustrates a portion of an example opto-electronic device employing a diffuser to provide an ultra-wide field of illumination.
FIG. 2 illustrates a detailed view of the diffuser of FIG. 1.
FIG. 3A provides an example illustration of Snell's law.
FIG. 3B provides an example equation description of Snell's law.
FIG. 4 provides a coarse simulation of an example diffuser that employs only planar surfaces.
FIGS. 5A, 5B and 5C illustrate example diffusers having varying dimensions.
FIGS. 6A and 6B illustrate another example diffuser.
FIGS. 7A to 7C illustrate two other example diffusers.
FIGS. 8A, 8B and 8C illustrate examples of different intensity distributions from different disclosed diffusers.
FIG. 9 illustrates example design consideration for an optical diffuser.
FIG. 10 provides an example equation to determine one or more angles of a representative extension.

### DETAILED DESCRIPTION OF THE DISCLOSURE

An electronic device to distribute an ultra-wide field of illumination is disclosed. In examples, the opto-electronic device includes an optical source to generate light and a diffuser to receive and distribute the light. The diffuser includes a plurality of extensions, each having a reflective surface arranged at an angle to cause total internal reflection of an incident light ray, and an exit surface arranged at an angle relative to the reflective surface and configured to direct the light ray at one or more transmission angles different from an incident angle.

When a conventional optical diffuser is used to illuminate a target field of illumination (FOI), Fresnel losses become extremely high as the angle of incidence (AOI) gets close to the critical angle (e.g., the angle at which total internal reflection (TIR) occurs) of the diffuser substrate material. These losses limit the achievable FOI of such conventional diffusers to approximately 130-140 degrees maximum for standard refractive index materials near (e.g., with an index of refraction of approximately 1.5).

Some suitable ultra-wide FOls can be achieved with conventional diffusers that employ secondary optics, such as a fish-eye type lens optic. Although a reasonable FOI results from such an approach, losses are compounded due to the large number of surfaces. Further, such an optical system is typically quite bulky and potentially complex. FOls of up to approximately 160 degrees can be achieved by employing higher refractive index materials, but such materials are typically molded glass, which are extremely expensive. Moreover, it is difficult to mold small features with such materials, features to shape output profiles in multiple (e.g., two) dimensions. Thus, high refractive index materials are typically employed only for a single diffusion dimension.

The disclosed diffuser (e.g., an ultra-wide field of illumination (UWFOI) diffuser using total internal reflection (TIR)) uses the TIR of the diffuser material to direct portions of the light to one or more exit surfaces to circumvent the inherent Fresnel losses associated with a planar output surface. The disclosed diffuser can use a single or multiple TIR turning surfaces to direct the light at one or more angles to such exit surfaces to increase the possible FOI angles. These exit surfaces can be designed as non-planar in order to better shape the optical output profile.

In some examples, the diffuser 102 can be employed and/or incorporated with devices and/or optical systems to produce an ultra-wide field of illumination (UWFOI). For example, the diffuser 102 is configured to convert light (e.g., from a light source with low divergence) into flood illuminators with relatively high field of illumination (FOI) values (e.g., greater than 140 degree and less than 180 degrees), and a desired target radiant intensity profile. The diffuser 102 takes advantage of the material's TIR characteristic to direct the light through the diffuser material to one or more target exit surfaces. Therefore, the diffuser 102 mitigates TIR restrictions and loss limitations associated with the FOI of conventional diffusers. Moreover, an efficiency of the diffuser 102 can be adjusted and/or improved based on the relatively high reflectivity of the TIR surface, and/or designing the optical system employing the diffuser 102 to receive light with a smaller AOI relative to the target exit surface(s).

One or more components of an example optical system may yield an ultra-wide field of illumination. In some examples, an exit surface of the diffusing component (e.g., the diffuser 102) includes one or more sloped sub-surfaces, which may additionally or alternatively include one or more exit surfaces having tilt angles greater than a minimum critical angle.

An UWFOI can be achieved with a conventional diffuser and an additional optic (e.g., a secondary fish-eye type lens optic). However, although the FOI is similar, losses due to the relatively large number of surfaces causes signal loss, and also results in a more bulky package. For applications with limited space and/or small envelopes (e.g., personal electronic devices), bulky packaging and/or extended physical optical systems may render the conventional diffuser unsuitable for the application.

Further, a FOI of up to approximately 160 degrees can be achieved in materials with a greater refractive index, but these are typically molded glass materials and are relatively heavy and expensive. Moreover, it is difficult to mold small features to shape desired output profiles in two dimensions, so these are typically designed for only one-dimension of diffusion.

In some examples, an additional distribution optic 108 can be employed with the diffuser 102. For instance, the distribution optic 108 may include one or more diffractive optical elements (DOE), a collimator, a filter, another diffuser, prism, a coated mirror, coated optical block, a lens, and/or a reflector, as a list of non-limiting example optical elements to produce a desired effect (e.g., distribution angle, light intensity, projected light structure, etc.).

In some examples, one or more of the device 100, the diffuser 102, and/or the light source optical components may be embedded in a system that requires diffuse illumination, such as an infrared illuminator for a low-light camera or camera system, a standalone illuminator, and/or a light-based three-dimensional (3D) sensing system.

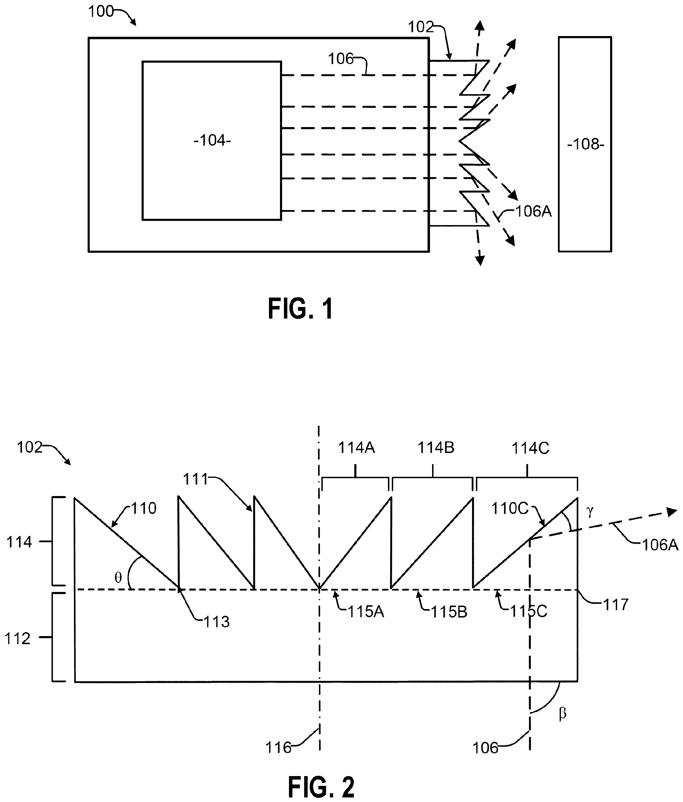

FIG. 1 illustrates an example device 100 employing a wide angle diffuser 102 (e.g., an ultra-wide field of illumination (UWFOI)) using total internal reflection (TIR). In some examples, the device 100 is a laser and/or other illumination, including a light source 104 to generate light rays 106.

In some examples, the light source 104 can include one or more of a ridge-type single quantum well (SQW) or multiple quantum well (MQW) semiconductor laser, a buried heterostructure (BH) SQW or MQW laser, a distributed-feedback (DFB) or distributed Bragg reflector (DBR) laser, a vertical-cavity surface-emitting laser (VCSEL), photonic crystal surface-emitting lasers, InP based laser, GaAs based laser, GaSb based laser, GaN based laser, or other suitable laser.

Further, although one or more laser types and/or wavelengths are discussed in the several examples, application of the concepts disclosed herein are not limited to a particular laser or wavelength. In some examples, lasers are disclosed that operate over a range of wavelengths, including 850 nanometers, 940 nanometers, 980 nanometers, 1350 nanometers, 1380 nanometers, 1480 nanometers, and/or 1550 nanometers, as a list of non-limiting examples.

As shown, the light rays 106 are directed to the diffuser 102, which travel through a material of the diffuser and interface with one or more surfaces of the diffuser 102 to distribute exiting light rays 106A via multiple directions.

As shown in the expanded view of the example diffuser 102 of FIG. 2. As illustrated, the diffuser 102 is symmetrical about centerline 116, and comprises a base 112 and one or more extensions 114, which generally extend from the base 112 above line 117. Each extension 114 is generally in a triangular shape, with a sloped side or reflective surface 110, a substantially vertical side or exit surface 111, both of which may terminate at a point 113 (e.g., between adjacent extensions 114). Although each extension 114 can have similar or identical dimensions, as shown in the example of FIG. 2, the extensions can have different dimensions. For instance, extensions 114A, 114B, and 114C are defined by bases 115A, 115B, and 115C, respectively, and/or corresponding sloped sides, vertical sides and angles.

In operation, an incident light ray 106 enters the base 112 at an angle β, which may be 90 degrees, is deflected from reflective surface 110C at an angle γ. The resulting exiting light ray 106A is thus substantially redirected from the original optical path, based on at least the index of refraction of the material, and the angle of the sloped side 110C. Example extensions 114A and/or 114B can redirect incoming light rays differently from extension 114C, thereby allowing for a broad distribution of illumination caused by interaction with the exiting light rays 106A.

Although the example diffuser 102 is illustrated as having a substantially rectangular base, in some examples the base can have any suitable geometer (e.g., triangular, circular, cylindrical, etc.). In some examples, the base 112 and/or one or more of the extensions 114 are formed from a common material (e.g., with a single index of refraction). In some examples, the base 112 or a portion of the base is formed with a first material (e.g., with a first index of refraction), and one or more of the extensions (e.g., 114A, 114B, 114C) are formed with a second material (e.g., with a second index of refraction). For instance, the base and/or extension(s) may exhibit properties of a gradient index (GRIN) optic, to redirect incoming light rays in addition to the effects resulting from the disclosed dimensions of the diffuser 102.

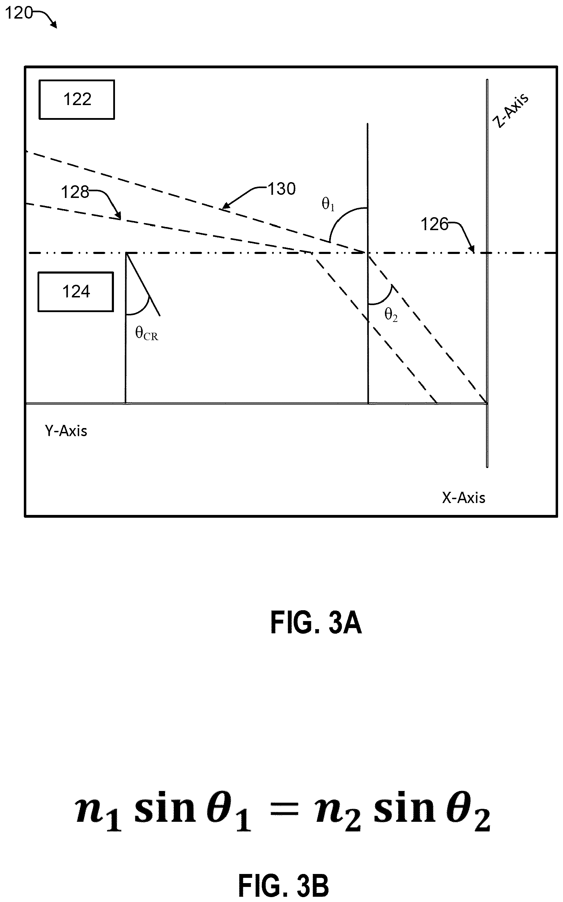

FIG. 3A provides an illustration of Snell's law 120 as first light ray 128 and a second light ray 130 are transmitted through a first medium 122 (e.g., air, gas, a translucent material, etc.) with a first index of refraction, and into a second medium 124 (e.g., another air, gas, a translucent material, etc.) at an interface 126. In an example, the first medium 122 is environmental air, and the second medium 124 is an acrylic material, having an index of refraction of approximately 1.488, and the first and second light rays 128, 130 have a wavelength of approximately 940 nm. The critical angle θCR for material 124 is approximately 42.3 degrees.

As provided in FIG. 3B, when n1 > n2, where n1 is the refractive index of the first material 122 in a first region and n2 is the refractive index of the second material 124 in a second region, the incidence angle Θ1 from the first region is greater than the transmission angle θ2. Therefore, a beam with incident angle Θ1 will reach 90 degrees faster than a beam with incident angle θ2. The value of angle θ2 when angle Θ1 reaches 90 degrees is referred to as the critical angle θCR. If the incident angle Θ1 is greater than the critical angle θCR, the light ray will be fully reflected at the surface/interface 126.

Beyond the transmission angle, the Fresnel losses are dependent on AOI as well. For example, for a refractive index of 1.488, the relative transmission drops to approximately 90% at a transmission angle of 65 degrees versus a transmission angle of 0 degrees for non-polarized light. This drop increases quickly as the AOI increases. Therefore, these increased Fresnel losses approaching the critical angle limit the maximum FOI value. Adding an anti-reflective coating can slightly increase the transmission at these higher angles, but the maximum attainable FOI from a conventional diffuser with refractive indices of approximately 1.5 are approximately 140 degrees.

The disclosed diffuser takes advantage of the TIR to get to higher FOls than are possible with conventional diffuser designs. The disclosed diffuser employs a physical structure at exit surfaces that are designed to use the TIR to direct light rays in one or more directions, thereby redistributing light energy to exit the diffuser at various locations resulting in a relatively large FOI.

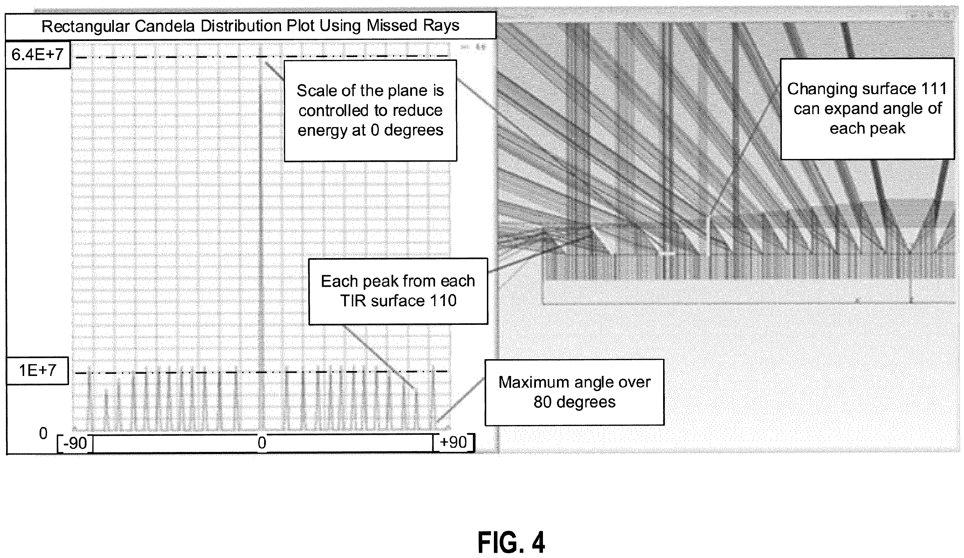

A coarse simulation of an example diffuser that employs only planar surfaces is shown in FIG. 4. In the example simulation, the maximum angle of the FOI can easily be larger than 80 degrees. As shown, some tenets of the disclosed concepts are pointed out, with the simulation being provided with collimated light rays. The various surfaces (e.g., reflective surface 110, exit surface 111) can be shaped and/or dimensioned to further spread and control an optical output profile of a UWFOI diffuser. FIG. 4 thus Illustrates design options for creating a smooth distribution in the FOI.

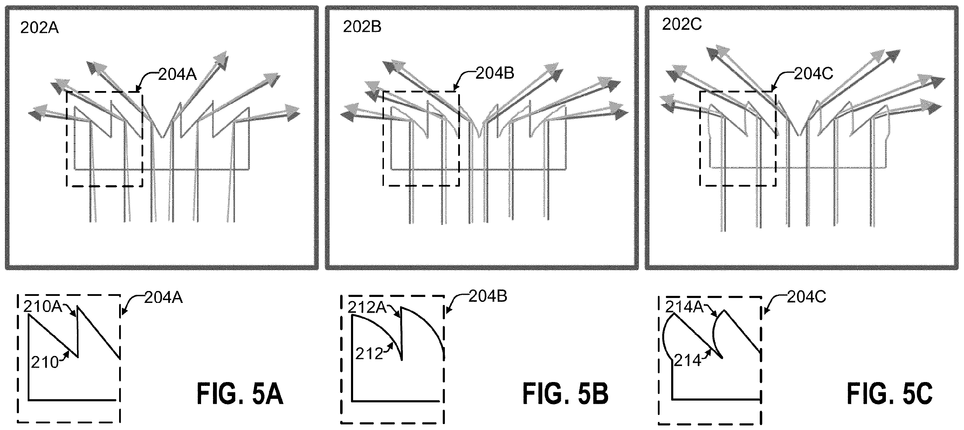

The smooth distribution of FOI can be obtained by designing for a diverging source, and/or shaping one or both of the TIR or exit surfaces as shown in example FIGS. 5A, 5B and 5C. As shown in FIG. 5A, a diverging source can spread the outgoing light to obtain a smoother distribution of the light in the FOI. In addition, a curvature of the TIR surface (as shown in FIG. 5B) or the curvature of the exit surface (as shown in FIG. 5C) can be designed to obtain a smooth distribution of FOI.

As shown, FIG. 5A illustrates an example diffuser202A. As provided in the portion 204A, a substantially vertical side 210A meets a substantially straight sloped side 210 (e.g., similar to the diffuser 102 shown in FIG. 2). FIG. 5B illustrates another example diffuser 202B. As provided in the portion 204B, a substantially vertical side 212A meets a curved sloped side 212. FIG. 5C illustrates another example diffuser 202C. As provided in the portion 204C, vertical side 214A has a curved sloped (e.g., as the extensions extend from a base). The side 214A meets a substantially straight angled side 214.

In each diffuser design shown in FIGS. 5A to 5C, an input intensity distribution of the light source is given due consideration, as the TIR and shaping area ratios take into account an amount of incoming light power. As a result of such design considerations, a more uniform output is created.

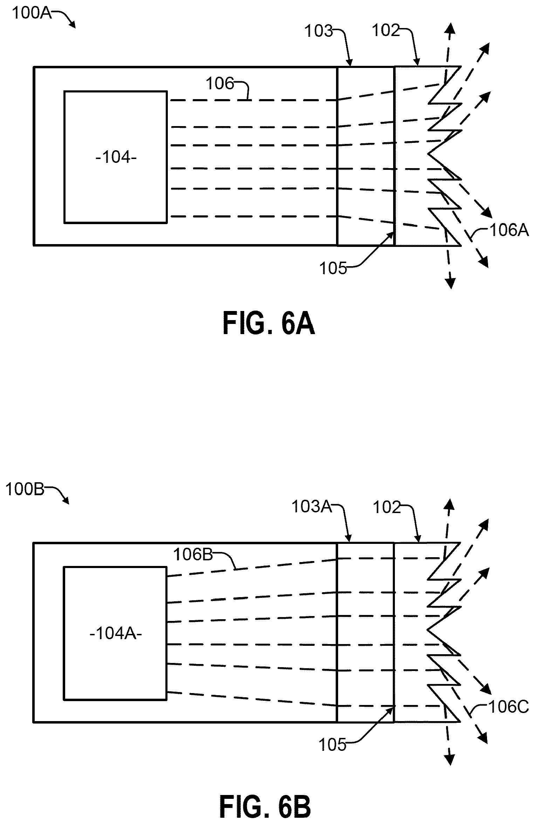

In some examples, a more diffuse or diverging input into the diffuser 102 can be achieved by integrating a diffusing optical surface, lens, or structure 103 at an input surface 105 of the diffuser 102. For instance, light beams 106 from light sources (e.g., light source 104) that generate a substantially collimated light output can be channeled through diffusing optical structure 103, as shown in FIG. 6A. As a result, the direction, angle, and/or distribution of substantially parallel, uniform, and/or collimated light can be modified prior to introduction to the diffuser 102.

For instance, the diffusing optical structure 103 may include one or more diffractive optical elements (DOE), a filter, another diffuser, prism, a coated optical block, a lens, and/or a reflector, as a list of non-limiting example optical elements to produce a desired effect.

In some additional or alternative examples, divergent beams 106B from divergent light sources (e.g., light source 104A) can have their divergence reduced by incorporating one or more optical devices 103A (e.g., a single lens surface collimator) along the optical path, such as on a surface of the diffuser 102 (e.g., at an input surface 105), as shown in FIG. 6B. For instance, the optical devices 103A may include one or more of a collimator, a filter, another diffuser, a prism, a coated mirror, a coated optical block, a lens, and/or a reflector, as a list of non-limiting example optical elements to produce a desired effect.

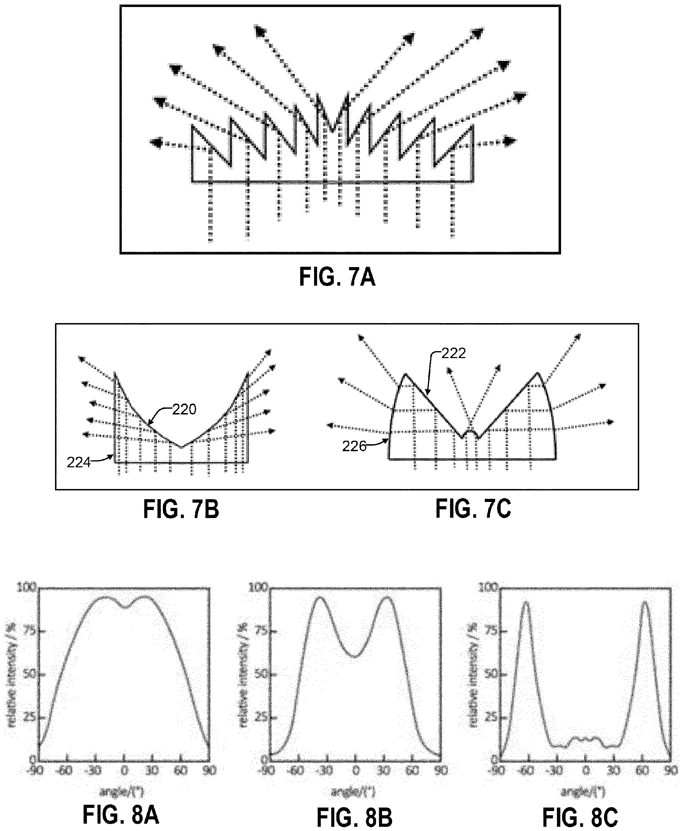

In some examples, the extensions are designed with different heights relative to the base, in order to avoid optical clipping, as shown in FIG. 7A. Depending on a desired size of the diffuser and/or manufacturing limitations, the TIR surface can be designed as many multiple extension surfaces, as shown in FIG. 7A, and/or a single, continuous surface (e.g., with a curvature connecting one or more extensions), as shown in FIGS. 7B and 7C.

For example, to manage manufacturing issues, uncontrolled scattering, and/or transmission discontinuity issues, a single TIR UWFOI diffuser surface offers some advantages. As shown in FIG. 7B, a first example TIR optical surface 220 can be designed with a desired curvature, and/or a second example TIR optical surface 222 can be designed as a plane. Both TIR surfaces reflect the light rays, which are then distributed. In some examples, another optical device or lens structure can be added to the optical path (e.g., as the light rays exit the diffusers) to control an angle of transmission. As shown in the example of FIG. 7B, an external surface 224 of the diffuser can be substantially flat, and/or be designed with a curved outline 226 to distribute the light intensity, as shown in FIG. 7C. In view of the multiple design options, disclosed diffusers can be designed with multiple extension geometries, including external surface shapes of the diffuser and/or complementary optics, to result in a wide variety of light distribution patterns and/or intensities.

In some examples, one or more diffusers can provide a variety of light distribution profiles, as illustrated in FIG 8A-8C. As shown, FIG 8A illustrates a substantially flat top diffuser with a more gentle central distribution, FIG 8B illustrates a moderate batwing diffuser with a dip at the center, and FIG 8C illustrates a substantially "batwing" type diffuser, with significant peaks at either end. In the examples illustrated in the figures, "batwing" type refers to outside intensity points (e.g., light beams exiting at the ends of the diffuser) being greater than an intensity value at 0 degrees, thereby resembling the outside points of the wings of a bat. The illustrated intensity distributions can be obtained by changing the ratio of areas responsible for different angles.

Although some examples are provided with a single or a limited number extensions and/or extension surface types, any number of extensions may be employed in any combination while adhering to the concepts disclosed herein. For instance, a single diffuser may incorporate elements of each of FIGS. 2, 6, 7A and/or 7B, formed as a single diffuser, in multiple segments each with the different elements, with a single or multiple indexes of refraction, or any combination thereof. Moreover, multiple diffusers may be layered, such that light rays distributed from a first diffuser may enter into a second diffuser to yield a relatively complex distribution pattern.

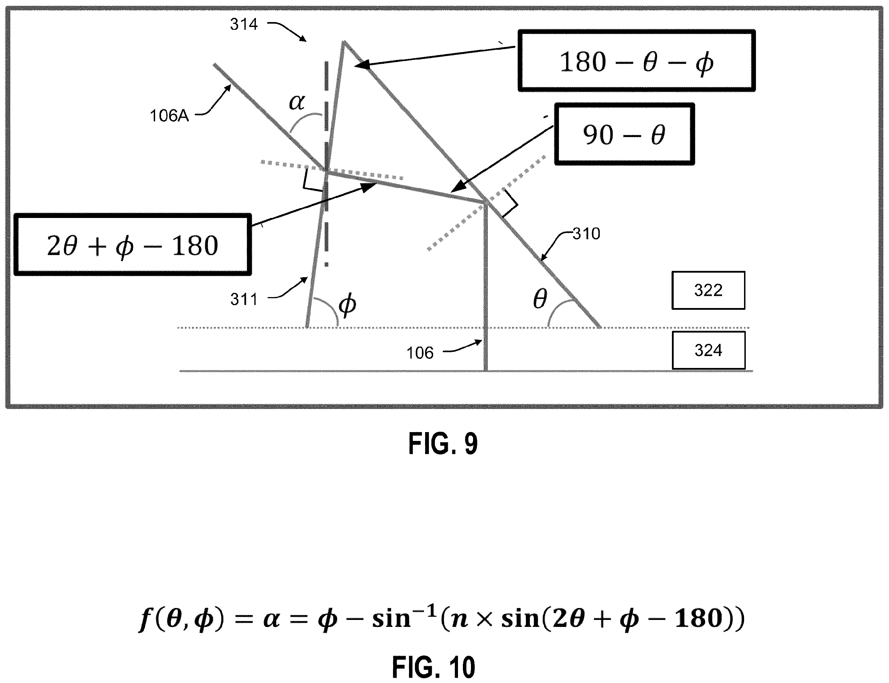

FIG. 9 illustrates example design consideration for an optical diffuser (e.g., extension) and/or device employing disclosed concepts to enhance light ray diffusion/distribution.

For instance, a light ray 106 is travels into and an extension 314, reflecting off of surface 310, and then transmitting through surface 311. Thus, the light ray 106 travels through a first medium 324 with a first index of refraction and then exits the extension 314 to enter medium 322. To determine one or more of the angles θ, α, and/or Φ represented in FIG. 9, a representative equation is provided in FIG. 10. Determination of these angles in view of a known index of refraction n of the first material 324 can be used to design and/or form the diffuser, in accordance with the concepts disclosed herein.

In disclosed examples, a diffuser to distribute an ultra-wide field of illumination includes a plurality of extensions, each having a reflective surface arranged at an angle to cause total internal reflection of an incident light ray; and an exit surface arranged at an angle relative to the reflective surface and configured to direct the light ray at one or more transmission angles different from an incident angle.

In some examples, each of the plurality of extensions include a first extension having a first shape to direct the light ray with a first transmission angle of the one or more transmission angles; and a second extension having a second shape to direct the light ray with a second transmission angle of the one or more transmission angles.

In examples, the first extension is arranged opposite the second extension relative to a centerline. In examples, the first and second extensions are arranged as a mirror image of third and fourth extensions of the plurality of extensions relative to a centerline. In examples, the first shape has one or more dimensions substantially similar to one or more dimensions of the second shape. In examples, the first shape has one or more dimensions different to one or more dimensions of the second shape.

In examples, the first shape or the second shape is generally triangular. In some examples, a first extension of the plurality of extensions is adjacent a second extension. In some examples, a base to support the plurality of extensions and receive the incident light ray. In examples, a first extension of the plurality of extensions is separated from a second extension by a portion of the base.

In some examples, at least one of the reflective surface or the exit surface is substantially linear.

In some examples, at least one of the reflective surface or the exit surface has a predetermined curvature.

In some examples, the diffuser comprises a material with an index of refraction greater than 1.4. In examples, the material is a polymeric material.

In some disclosed examples, an opto-electronic device to distribute an ultra-wide field of illumination includes an optical source to generate light and a diffuser to receive and distribute the light. The diffuser includes a plurality of extensions having a reflective surface arranged at an angle to cause total internal reflection of an incident light ray, and an exit surface arranged at an angle relative to the reflective surface and configured to direct the light ray at one or more transmission angles different from an incident angle.

In some examples, a distribution optic arranged on an input side of the diffuser optic described herein to further form and distribute the light prior to the TIR extensions is comprised of one or more of a diffractive optical element (DOE), a collimator, a filter, and/or diffusing surface.

In some examples, the optical source is one or more of an edge emitting laser (EEL) array, a ridge type single quantum well (SQW) or multiple quantum well (MOW) semiconductor laser, a buried heterostructure (BH) SQW or MQW laser, a distributed-feedback (DFB) or Distributed Bragg reflector (DBR) laser, a Vertical-cavity surface-emitting laser (VCSEL), photonic crystal surface-emitting lasers, InP based laser, GaAs based laser, GaSb based laser, or GaN based laser.

In examples, the light has a wavelength of 850 nanometers, 940 nanometers, or 1380 nanometers.

In examples, the diffuser optic, along with the optical source, would be part of an opto-electronic device including a standalone illuminator, camera system, or light-based three-dimensional (3D) sensing system.

In the drawings, similar features are denoted by the same reference signs throughout.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:
1. A diffuser to distribute an ultra-wide field of illumination comprising:
   a plurality of extensions comprising:
   a reflective surface arranged at an angle to cause total internal reflection of an incident light ray; and
   an exit surface arranged at an angle relative to the reflective surface and configured to direct the light ray at one or more transmission angles different from an incident angle.
2. The diffuser of aspect 1, wherein each of the plurality of extensions comprise:
   a first extension having a first shape to direct the light ray with a first transmission angle of the one or more transmission angles; and
   a second extension having a second shape to direct the light ray with a second transmission angle of the one or more transmission angles.
3. The diffuser of aspect 2, wherein the first extension is arranged opposite the second extension relative to a centerline.
4. The diffuser of aspect 2, wherein the first and second extensions are arranged as a mirror image of third and fourth extensions of the plurality of extensions relative to a centerline.
5. The diffuser of aspect 2, wherein the first shape has one or more dimensions substantially similar to one or more dimensions of the second shape.
6. The diffuser of aspect 2, wherein the first shape has one or more dimensions different to one or more dimensions of the second shape.
7. The diffuser of aspect 2, wherein the first shape or the second shape is generally triangular.
8. The diffuser of aspect 1, wherein a first extension of the plurality of extensions is adjacent a second extension.
9. The diffuser of aspect 1, further comprising a base to support the plurality of extensions and receive the incident light ray.
10. The diffuser of aspect 9, wherein a first extension of the plurality of extensions is separated from a second extension by a portion of the base.
11. The diffuser of aspect 1, wherein at least one of the reflective surface or the exit surface is substantially linear.
12. The diffuser of aspect 1, wherein at least one of the reflective surface or the exit surface has a predetermined curvature.
13. The diffuser of aspect 1, wherein the diffuser comprises a material with an index of refraction greater than 1.4.
14. The diffuser of aspect 13, wherein the material is a polymeric material.
15. An opto-electronic device to distribute an ultra-wide field of illumination comprising:
   an optical source to generate light; and
   a diffuser to receive and distribute the light, the diffuser comprising a plurality of extensions having:
      a reflective surface arranged at an angle to cause total internal reflection of an incident light ray; and
      an exit surface arranged at an angle relative to the reflective surface and configured to direct the light ray at one or more transmission angles different from an incident angle.
16. The opto-electronic device of aspect 15, further comprising a distribution optic to further distribute the light.
17. The opto-electronic device of aspect 16, wherein the distribution optic comprises one or more of a diffractive optical element (DOE), a collimator, a filter diffusing surface.
18. The opto-electronic device of aspect 16, wherein the opto-electronic device is one or more of a standalone illuminator, a camera system, or a light-based three-dimensional (3D) sensing system.
19. The opto-electronic device of aspect 15, wherein the optical source is one or more of an edge emitting laser (EEL) array, a ridge type single quantum well (SQW) or multiple quantum well (MQW) semiconductor laser, a buried heterostructure (BH) SQW or MQW laser, a distributed-feedback (DFB) or Distributed Bragg reflector (DBR) laser, a Vertical-cavity surface-emitting laser (VCSEL), photonic crystal surface-emitting lasers, InP based laser, GaAs based laser, GaSb based laser, or GaN based laser.
20. The opto-electronic device of aspect 15, wherein the light has a wavelength of 850 nanometer, 940 nanometers, or 1380 nanometers.

Implementations as described herein may relate to the following: An opto-electronic device to distribute an ultra-wide field of illumination is. In examples, the electronic device includes an optical source to generate light and a diffuser to receive and distribute the light. The diffuser includes a plurality of extensions, each having a reflective surface arranged at an angle to cause total internal reflection of an incident light ray, and an exit surface arranged at an angle relative to the reflective surface and configured to direct the light ray at one or more transmission angles different from an incident angle.

The present application claims priority of U.S. Patent Application No. 18/119,358, filed March 9, 2023. The entire disclosure of this application is hereby explicitly incorporated by reference into the present application.

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

## Claims

1. A diffuser to distribute an ultra-wide field of illumination comprising:
a plurality of extensions comprising:
a reflective surface arranged at an angle to cause total internal reflection of an incident light ray; and
an exit surface arranged at an angle relative to the reflective surface and configured to direct the light ray at one or more transmission angles different from an incident angle.

2. The diffuser of claim 1, wherein each of the plurality of extensions comprise:
a first extension having a first shape to direct the light ray with a first transmission angle of the one or more transmission angles; and
a second extension having a second shape to direct the light ray with a second transmission angle of the one or more transmission angles.

3. The diffuser of claim 2, wherein the first extension is arranged opposite the second extension relative to a centerline.

4. The diffuser of claim 2, wherein the first and second extensions are arranged as a mirror image of third and fourth extensions of the plurality of extensions relative to a centerline.

5. The diffuser of any one of claims 2 to 4, wherein the first shape has one or more dimensions substantially similar to one or more dimensions of the second shape.

6. The diffuser of any one of claims 2 to 5, wherein the first shape has one or more dimensions different to one or more dimensions of the second shape, and/or wherein the first shape or the second shape is generally triangular.

7. The diffuser of any one of claims 1 to 6, wherein a first extension of the plurality of extensions is adjacent a second extension.

8. The diffuser of any one of claims 1 to 7, further comprising a base to support the plurality of extensions and receive the incident light ray, and optionally wherein a first extension of the plurality of extensions is separated from a second extension by a portion of the base.

9. The diffuser of any one of claims 1 to 8, wherein at least one of the reflective surface or the exit surface is substantially linear.

10. The diffuser of any one of claims 1 to 9, wherein at least one of the reflective surface or the exit surface has a predetermined curvature.

11. The diffuser of any one of claims 1 to 10, wherein the diffuser comprises a material with an index of refraction greater than 1.4, and optionally wherein the material is a polymeric material.

12. An opto-electronic device to distribute an ultra-wide field of illumination comprising:
an optical source to generate light; and
a diffuser to receive and distribute the light, the diffuser comprising a plurality of extensions having:
a reflective surface arranged at an angle to cause total internal reflection of an incident light ray; and
an exit surface arranged at an angle relative to the reflective surface and configured to direct the light ray at one or more transmission angles different from an incident angle.

13. The opto-electronic device of claim 12, further comprising a distribution optic to further distribute the light, and optionally wherein the distribution optic comprises one or more of a diffractive optical element (DOE), a collimator, a filter diffusing surface, and/or wherein the opto-electronic device is one or more of a standalone illuminator, a camera system, or a light-based three-dimensional (3D) sensing system.

14. The opto-electronic device of claim 12 or 13, wherein the optical source is one or more of an edge emitting laser (EEL) array, a ridge type single quantum well (SQW) or multiple quantum well (MQW) semiconductor laser, a buried heterostructure (BH) SQW or MQW laser, a distributed-feedback (DFB) or Distributed Bragg reflector (DBR) laser, a Vertical-cavity surface-emitting laser (VCSEL), photonic crystal surface-emitting lasers, InP based laser, GaAs based laser, GaSb based laser, or GaN based laser.

15. The opto-electronic device of any one of claims 12 to 14, wherein the light has a wavelength of 850 nanometer, 940 nanometers, or 1380 nanometers.
